# EUROPEAN PATENT SPECIFICATION

(11) **EP 2 738 074 B1**
(45) Date of publication and mention of the grant of the patent: **07.03.2018**
(21) Application number: 11869973.5
(22) Date of filing: 20.10.2011
(51) Int. Cl.: B62J 99/00, H02K 21/24, B62J 6/06, B60B 19/00, H02K 7/14, B60B 21/12, B62J 6/12, H02K 7/18, B60B 7/00, B60B 7/02, B60B 7/06

(54) **DISK APPARATUS HAVING ATTACHABLE/DETACHABLE STRUCTURE TO/FROM SIDE SURFACE OF EXISTING WHEEL**
PLATTENVORRICHTUNG MIT BEFESTIGBARER/ABNEHMBARER STRUKTUR AN EINE/VON EINERSEITENFLÄCHE EINES BESTEHENDEN RADES
APPAREIL DISQUE AYANT UNE STRUCTURE QUI PEUT ÊTRE FIXÉE À UNE SURFACE LATÉRALE D'UNE ROUE EXISTANTE OU EN ÊTRE DÉTACHÉE

(30) Priority: 27.07.2011 KR 20110074479
(43) Date of publication of application: 04.06.2014
(73) Proprietor: Jang, Suk Ho, Seoul 157-010 (KR)
(72) Inventor: Jang, Suk Ho, Seoul 157-010 (KR)
(74) Representative: dompatent von Kreisler Selting Werner - Partnerschaft von Patent- und Rechtsanwälten mbB
(86) International application number: PCT/KR2011/007813
(87) International publication number: WO 2013/015486

(56) References cited:
- EP-A1- 0 404 299
- WO-A1-2004/023630
- CN-U- 201 674 373
- JP-A- 2001 292 553
- JP-A- 2008 044 588
- KR-A- 20110 064 759
- KR-A- 20110 064 759
- KR-B1- 100 928 433
- KR-Y- 910 000 342

## Description

### [Technical Field]

The present invention relates to a disk apparatus detachably coupled to a wheel to generate electric power or to drive the wheel with a driving force generated based on the electric power, and more particularly, to a disk apparatus having a detachable/attachable structure from/to a side of a wheel which includes a fixing plate coupled to a wheel shaft located at the central portion of the wheel and two pairs of ring-shaped rotational plates coupled to a rim of the wheel in a shape of a circular plate. In the disk apparatus, coil units are radially fixed to the fixing plate and magnet units are radially formed and fixed to the ring-shaped rotational plates corresponding to the coil units, such that a battery is charged with the electric power generated as the ring-shaped rotational plates are rotated and the ring-shaped rotational plates are rotated or allowed to brake by the electric power of the battery under control of a separated control box. Specifically, the disk apparatus having the detachable/attachable structure may be applied to a previous wheel so that the efficiency may be improved.

### [Background Art]

A wheel is a component having a circular-rim shape which converts sliding friction into rolling friction to reduce the resistance caused when an object moves. Such a wheel has been applied to a cart for carrying things or various transport apparatus, such as a bicycle, a motorcycle or a vehicle, into which people get.

Among them, the bicycle is a generic name of relative light weight two-wheeled vehicles driven by driver's force. In the bicycle, a front wheel is connected to a rear wheel by means of a pipe, and a driving force is transferred to the rear wheel through a connection configuration including a chain, pedals and a chain sprocket as the driver pedals. In this case, the front wheel is freely rotated due to the friction between the front wheel and the ground.

However, since the general bicycle is purely driven by driver's force, a user may feel extremely tired when he drives the bicycle for a long time or travels for a long distance. In addition, it is impossible for a beginner to ride a bicycle for a long time or travel for a long distance by bicycle.

In order to overcome the limitation of a bicycle on an ascent, a bicycle employs a multi-stage gear system so that a rider of the bicycle may more easily climb a hill or an ascent road. However, although the multi-stage gear system allows a rotation rate of pedaling transferred through the chain sprocket to be increased so that the grade-ability is obtained in proportion to the gear ratio, since the physical strength is exhausted as much as pedaling, much physical exercise is still required.

Thus, an electric motorized bicycle, on which an electric motor unit is mounted to automatically generate driving power by applying torque generated from the electric motor unit to the rear wheel, has been recently released.

Such an electric motorized bicycle includes a battery which may be charged with household power and the electric motor unit rotated by the battery power. The electric motorized bicycle is enabled to be driven by transferring the torque generated from the electric motor unit through a power transmission to the rear wheel without depending on the driver's force.

However, the operation of charging the electric motorized bicycle is necessary to use it again in future after the electric motorized bicycle is driven, so that much power is consumed and a long charging time is taken to charge the electric motorized bicycle, so the electric motorized bicycle has many limitations for use. When the electric motorized bicycle is used for a long distance or time so that the battery is completely discharged and the electric motorized bicycle is no longer operated, the electric motorized bicycle is driven in dependence on only driver's force so that the driver feels fatigued very. In addition, since more much momentum and physical strength are required due to the weights of the battery and the electric motor unit as well as the bicycle, electric motorized bicycle is not quite efficient.

Thus, as described in Korean Patent Registration No. 0928433 issued to the same applicant of the present invention, an electric motor usable as a generator according to Korean Patent Application No. 2009-0035298 filed by the same applicant of the present invention is applied to a bicycle to overcome the above described problems. The electric motor usable as a generator is installed to a side of a rear wheel of the bicycle, and the battery and the control box are installed to a low side of a main pipe of the bicycle. A shift switch and a gear shift switch are installed to a handle of the bicycle to allow the battery to be charged while the bicycle is pedaled on a descent or the level ground. In state that the battery is charged, the electric motor usable as a generator using the battery power rotates the rear wheel of the bicycle. Thus, the problems of the bicycle and the electric motorized bicycle are solved substantially and rationally through the bicycle having an electric motor usable as a generator which generates driving force using the electric motor usable as a generator.

However, according to the bicycle, since the electric motor usable as a generator is additionally installed to one side of the rear wheel of the bicycle, the weight of the bicycle is increased and the usable space of the rear wheel of the bicycle is occupied. In addition, since the torque or driving force of the rear wheel is transferred from or to the electric motor usable as a generator through the power transmission such as a belt and a belt pulley, an energy loss occurs during the power transfer due to the grounding resistance, so that the charging and power efficiencies of the electric motor usable as a generator may not be sufficiently utilized.

Specifically, when the electric motor usable as a generator is installed to be spaced upward apart from the side of the front wheel, it is difficult to install the electric motor usable as a generator to the front wheel due to many restrictions in a coupling unit or coupling space, the electric motor usable as a generator is compelled to be restrictively installed to the rear wheel. As described above, even though excellent electric generation and driving force may be obtained when the electric motor usable as a generator is installed to the front wheel of the electric motor usable as a generator, due to the restrictions in a coupling unit or coupling space, the merits are forced to be abandoned.

Thus, as described in Korea Patent Application No. 2009-0121482 filed by the same applicant of the present invention entitled "Wheel having electric motor usable as a generator for bicycle", to overcome the above described problems, a rotational plate has a disk shape and is provided at an inner side of a rim of a bicycle wheel freely rotated. The rotational plate is rotatably coupled to a wheel shaft positioned at a central portion of the wheel through a bearing. A separated fixing plate is coupled to the wheel shaft. Magnet units are radially disposed on a side surface of the rotational plate and coil units corresponding to the magnet units are radially disposed on a side surface of the fixing plate. The coil units are connected to a control box having a control circuit and a battery, such that the rotational plate is driven by the power discharged from the battery and the battery is charged through the coil units of the fixing plate as the rotational plate is driven under the control of the control circuit in the control box. Therefore, the wheel having electric motor usable as a generator for bicycle may overcome various problems caused in a bicycle having an electric motor usable as a generator according to the related art.

However, since the wheel described above has a structure in which a rotational plate having a disk shape is integrally formed in an inner side of a rim of the wheel and a fixing plate corresponding to the rotational plate is coupled to the rotational plate, the entire wheel should be newly fabricated to give the electric motor usable as a generator to the wheel, so that the wheel fabricating cost is increased.

In addition, since the wheel may be applied to limited wheels due to the configuration of the wheel, it is impossible to use the configuration in the variously applied wheels.

CN 201674373 U discloses a disk apparatus attachable to a wheel.

### [Disclosure]

### [Technical Problem]

To solve the above-described problems, an object of the present invention is to provide a disk apparatus according to claim 1 having a detachable/attachable structure from/to a side of a wheel which includes a fixing plate coupled to a wheel shaft located at the central portion of the wheel and two pairs of ring-shaped rotational plates coupled to a rim of the wheel in a shape of a circular plate, coil units which are radially fixed to both side surfaces of the fixing plate, and magnet units corresponding to the coil units which are radially fixed to a side surface of the ring-shaped rotational plate. In addition, the coil units are connected to a control box having a control circuit and a battery.

Thus, since the disk apparatus is detachably attached to an existing wheel, there is no need to additionally fabricate a wheel so that the cost may be reduced. Specifically, the battery is charged through the coil units of the fixing plate as the ring-shaped rotational plate installed to the existing wheel is rotated, and the ring-shaped rotational plate is rotated or allowed to brake by the electric power of the battery under control of the control box. In addition, in a using range, the disk apparatus can be variously applied to rotational wheels of a bicycle, a motorcycle or an automobile so that the usefulness can be improved.

### [Technical Solution]

To achieve the above objects, there is provided a disk according to claim 1 having a detachable/attachable structure from/to a side of a wheel. The disk apparatus includes a fixing plate provided at both side surfaces thereof with coil units, which are radially disposed, and formed at a center thereof with a through-hole so as to be coupled to a wheel shaft of the wheel; and a pair of ring-shaped rotational plates facing each other, having a ring shape and formed at side surfaces thereof with magnet units disposed radially corresponding to the coil units of the fixing plate, wherein the ring-shaped rotational plates are coupled through a coupling unit to a rim coupled to the wheel shaft through a bearing and a hub, such that the coil units and the magnet units correspond to each other while being spaced apart from each other at a same interval on both side surfaces of the fixing plate.

### [Advantageous Effects]

According to the disk apparatus having a detachable/attachable structure from/to a side of a wheel of the present invention, the disk apparatus can be detachably attached to an existing wheel in a simple manner, so that there is no need to additionally fabricate a wheel having the power generation and driving functions and the manufacturing cost may be reduced.

In addition, the battery is charged through the coil units of the fixing plate as the ring-shaped rotational plate installed to the existing wheel is driven, and the ring-shaped rotational plate is rotated or braked by the electric power of the battery under control of the control box.

Further, in a using range, the disk apparatus can be applied to various rotational wheels of a bicycle, a motorcycle and an automobile so that the usefulness can be remarkably improved.

### [Description of Drawings]

FIG. 1 is an exploded perspective view showing a disk apparatus having a detachable/attachable structure from/to a side of an existing wheel according to an embodiment of the present invention.
FIG. 2 is a perspective view showing a state that a disk apparatus having a detachable/attachable structure from/to a side of an existing wheel is installed to a wheel according to an embodiment of the present invention.
FIG. 3 is a perspective view showing a fixing plate of a disk apparatus having a detachable/attachable structure from/to a side of an existing wheel according to another embodiment of the present invention.
FIG. 4 is a sectional view showing a state that a disk apparatus having a detachable/attachable structure from/to a side of an existing wheel is installed to a wheel according to one example of the first embodiment of the present invention.
FIG. 5 is a sectional view showing a state that a disk apparatus having a detachable/attachable structure from/to a side of an existing wheel is installed to a wheel according to another example of the first embodiment of the present invention
FIG. 6 is a sectional view showing a state that a disk apparatus having a detachable/attachable structure from/to a side of an existing wheel is installed to a wheel according to one example of the second embodiment of the present invention.
FIG. 7 is a sectional view showing a state that a disk apparatus having a detachable/attachable structure from/to a side of an existing wheel is installed to a wheel according to another example of the second embodiment of the present invention.
FIG. 8 is a sectional view showing a state that a disk apparatus having a detachable/attachable structure from/to a side of an existing wheel is installed to a wheel according to the third embodiment of the present invention.
FIG. 9 is a view showing an entire bicycle, in which a disk apparatus having a detachable/attachable structure from/to a side of an existing wheel is installed to a wheel, according to an embodiment of the present invention.

### [Best Mode]

### [Mode for Invention]

Information contained herein above, and the terms used in the claims are not limited to be construed as a proactive means, the inventor of the term to describe his invention in the best way that you can define adequately the concept on the basis of the principle the meanings and concepts that meet the technical idea of the present invention should be interpreted.

Therefore, the embodiments described herein, as well as not to express all of the technical idea of the present invention of the present invention, the shape and configuration in FIG., You can replace them at the time of filing of the present invention, various equivalents and It should be understood there may exist a modified example.

Hereinafter, a preferable embodiment of the present invention will be described in detail with reference to accompanying drawings.

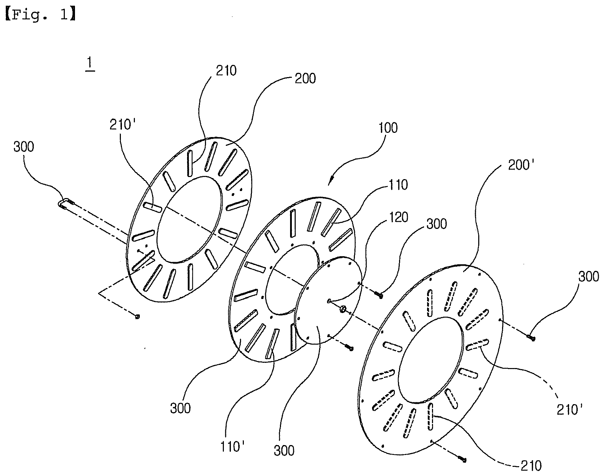

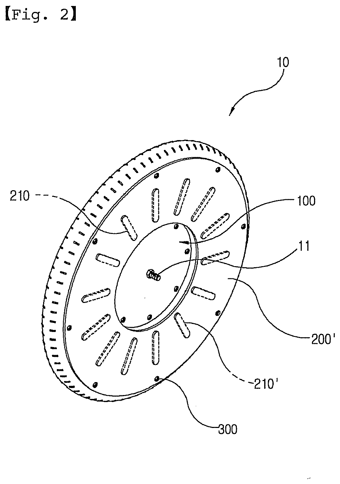

FIG. 1 is an exploded perspective view showing a disk apparatus having a detachable/attachable structure from/to a side of an existing wheel according to an embodiment of the present invention. FIG. 2 is a perspective view showing a state that a disk apparatus having a detachable/attachable structure from/to a side of an existing wheel is installed to a wheel according to an embodiment of the present invention.

As shown in FIGS. 1 and 2, a disk apparatus 1 having a detachable/attachable structure from/to a side of an existing wheel includes a fixing plate 100 installed to a wheel shaft 11 and a plurality of ring-shaped rotational plates 200 and 200' installed to a rim 12 of a wheel 10.

In this case, coil units 110 and 110' are radially disposed on both side surfaces of the fixing plate 100 which has a through-hole 130 at the center of the fixing plate 100. The fixing plate 100 is inserted into the wheel shaft 11 and coupled to the wheel shaft 11 through nuts conventionally provided to the wheel shaft 11.

The fixing plate 100 may include a main fixing plate 100a having disk shape and the through hole at the center thereof, and a ring-shaped fixing plate 100b having a ring plate shape (doughnut shape) and the coil units 110 and 110' which are radially disposed on both side surfaces of the ring-shaped fixing plate 100b. The main fixing plate 100a is coupled to the wheel shaft 11 through the through-hole 130 and the ring-shaped fixing plate 100b is coupled to one side surface (inner surface of the wheel) of the main fixing plate 100a through a coupling unit 300 such as a piece or a bolt to form a step difference.

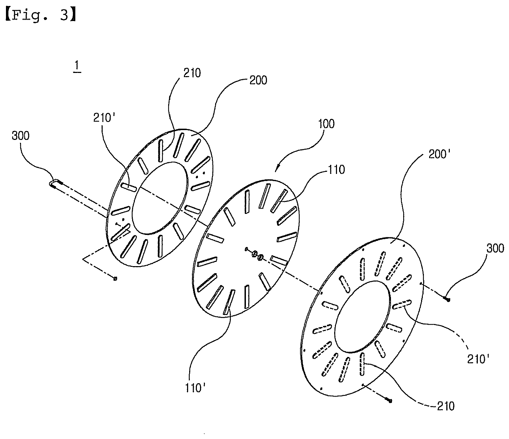

As shown in FIG. 3, the fixing plate 100 may be configured in a single disk-shaped plate having the coil units which are radially disposed on the single disk-shaped plate and may be coupled to the wheel shaft 11 through the through-hole 130.

The ring-shaped rotational plates 200 and 200' are prepared as a pair while facing each other and provided at each side surface thereof with magnet units 210 and 210', which are radially disposed corresponding to the coil units 110 and 110' of the fixing plate 100.

The ring-shaped rotational plates 200 and 200' are spaced apart from the both side surfaces of the fixing plate 100 at the same internal, respectively, such that the coil units 110 and 110' of the fixing plate 100 correspond to the magnet units 210 and 210'. The ring-shaped rotational plates 200 and 200' are coupled to the rim 12, which is freely rotated by the bearing 13 and the hub 14 of the wheel surrounding the wheel shaft 11, through a separated coupling unit 300, so that the ring-shaped rotational plates 200 and 200' are coupled to the wheel.

According to the structures and combinations described above, the fixing plate 100 coupled to the wheel 10 is not fixed to the fixed wheel shaft 11 and the pair of ring-shaped rotational plates 200 and 200' are enabled to be freely rotated together with the rim 12 through the bearing 13 about the wheel shaft 11, such that the fixing plate 100 may be allowed to generate electric power or to be rotated by electric power.

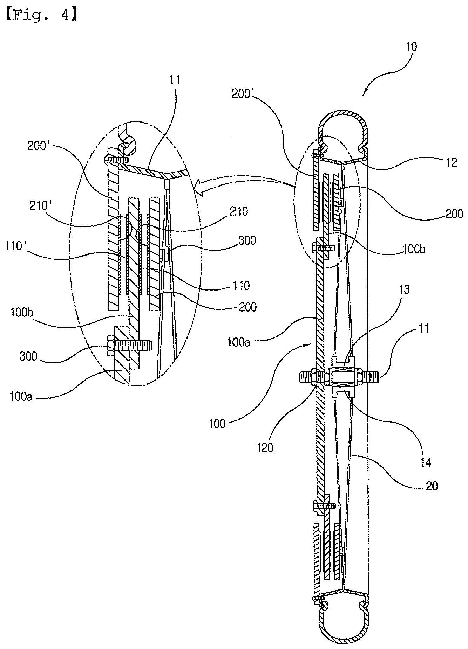

Meanwhile, the fixing plate 100 and the ring-shaped rotational plates 200 and 200' may be applied and installed to previous various wheels 10 so that they may be operated as a generator or electric motor. As shown in FIG. 4, when the fixing plate 100 and the ring-shaped rotational plates 200 and 200' are installed to a rim-type wheel having a spoke 200 connected to the hub 14, the fixing plate 100 is first coupled to the wheel shaft 11 and one ring-shape rotational plate 200 is coupled to the spoke 200, which is inside the wheel 10, at one side of the fixing plate 100 through the separated coupling unit 300. In addition, the other ring-shaped rotational plate 200' is coupled to a side surface of the rim 12 at an opposite side of the fixing plate 100 through the separated coupling unit 300.

In this case, the coupling unit 300 for fixing the ring-shaped rotational plates 200 and 200' includes a ring-shaped coupling unit 300 by which one ring-shaped rotational plate 200 is coupled to the spoke 20 by using a nut fastened to one side of the coupling unit 300, and a piece or bolt by which the other ring-shaped rotational plate 200' is coupled to a lateral side of the rim 12.

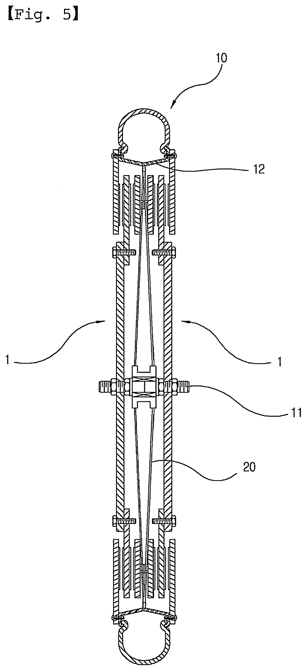

The fixing plate 100 and the ring-shaped rotational plates 200 and 200', which are installed to the rim -type wheel 10 having the spoke 20, are paired with each other. One pair of fixing plate 100 and the ring-shaped rotational plates 200 and 200' may be provided to only one side of the spoke 20 of the rim 12. To the contrary, as shown in FIG. 5, two pairs of fixing plate 100 and the ring-shaped rotational plates 200 and 200' may be provided symmetrically to both sides of the spoke 20 of the rim 12. This structure is preferably applied to a wheel of a bicycle or motorcycle conventionally having the spoke 20.

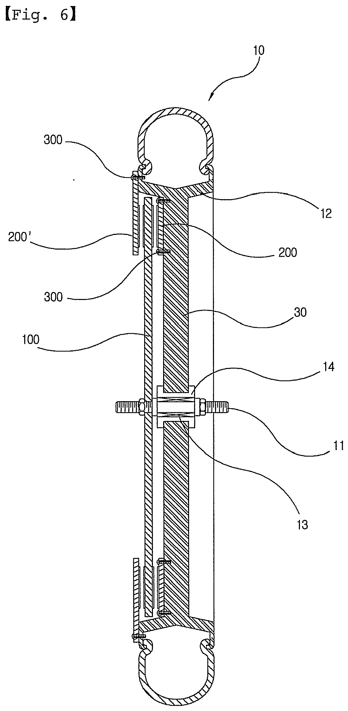

As shown in FIG. 6, when the fixing plate 100 and the ring-shaped rotational plates 200 and 200' are applied to a rim-type wheel 10 having a center-mount type disk 30 connected to the hub 14, the fixing plate 100 is primarily coupled to the wheel shaft 11. In addition, one ring-shaped rotational plate 200 is coupled to the disk 30 at one side of the fixing plate 100 through a piece-type coupling unit 300 and the other ring-shaped rotational plate 200' is coupled to a lateral side of the rim 12 through the piece-type coupling unit 300 at an opposite side of the fixing plate 100.

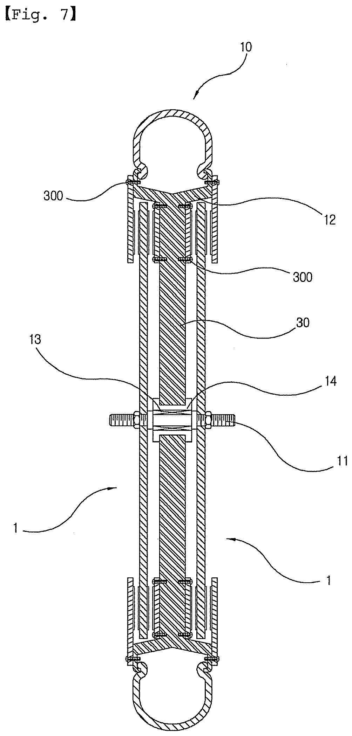

In this case, the fixing plate 100 and the ring-shaped rotational plates 200 and 200', which are installed to the rim-type wheel 10 having the central disk 30, are paired with each other. One pair of fixing plate 100 and the ring-shaped rotational plates 200 and 200' may be provided to only one side of the disk 30 of the rim 12. To the contrary, as shown in FIG. 7, two pairs of fixing plate 100 and the ring-shaped rotational plates 200 and 200' may be provided symmetrically to both sides of the disk 30 of the rim 12. This structure is preferably applied to a wheel of a bicycle or motorcycle conventionally having the disk 30.

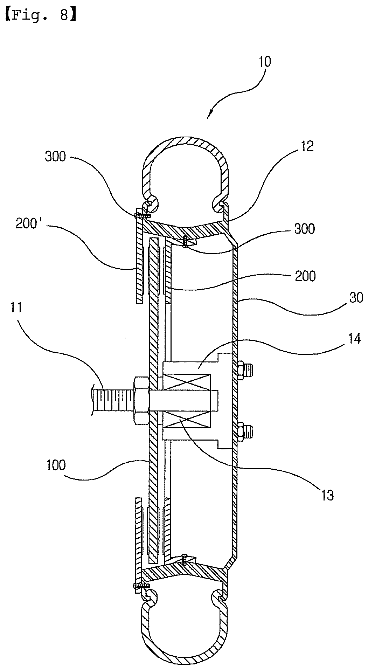

As shown in FIG. 8, when the fixing plate 100 and the ring-shaped rotational plates 200 and 200' are applied to a rim-type wheel 10 having an eccentric disk 30 connected to the hub 14, the fixing plate 100 is first coupled to the wheel shaft 11. One ring-shaped rotational plate 200 is coupled to an inner surface of the rim 12 at one side of the fixing plate 100 through a piece-type coupling unit 300, and the other ring-shaped rotational plate 200' is coupled to a lateral side of the rim 12 through the piece-type coupling unit 300 at an opposite side of the fixing plate 100.

When the fixing plate 100 and the ring-shaped rotational plates 200 and 200' are installed to the rim-type wheel 10 having the eccentric disk 30, the disk 300 eccentrically installed to the rim 12 has a structure enclosing one side surface of the rim 12. In this case, only one pair of the fixing plate 100 and the ring-shaped rotational plates 200 and 200' is preferably installed to the wheel. Thus, this structure is enabled to be applied to a previous rim-type wheel of a vehicle having an eccentric disk 30.

Meanwhile, the fixing plate 100 coupled to the wheel shaft 11 of the wheel 10 may have a structure in which the main fixing plate 100a overlaps the ring-shaped fixing plate 100b or may be configured in a single disk-shaped plate. In a case of the wheel 10 having the spoke 20 and the central disk-type rim 12, when the wheel shaft 11 protrudes more than the width of the rim 12, the ring-type fixing plate 100b, which partially overlaps one side of the main fixing plate 100a, is induced to be installed within the width of the rim 12 due to the step difference, so that the coil units 110 and 110' provided at both sides of the fixing plate 100 may be received between the magnet units 210 and 210' of the ring-shaped rotational plates 200 and 200' at a uniform interval.

Hereinafter, the operation of the disk apparatus having a detachable/attachable structure from/to a side of a wheel according to the present invention described above will be described in detail.

The disk apparatus having a detachable/attachable structure from/to a side of a wheel according to the present invention has a simple structure and is installed to the previous wheel to be operated as a generator, a motor or a brake. Thus, the disk apparatus is simply installed to a wheel of a bicycle, a motorcycle or a vehicle due to the above coupling structure, so that the disk apparatus may generate electric power as the wheel is rotated, may drive the wheel or may brake the wheel.

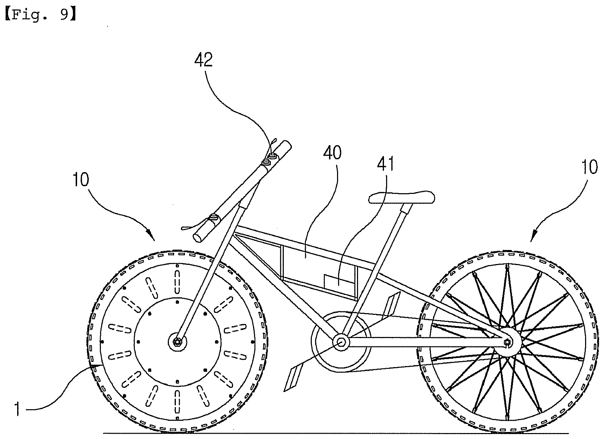

Thus, if reviewing an embodiment to which the disk apparatus 1 according to the present invention is applied, as shown in FIG. 9, when the disk apparatus 1 is applied to the existing wheels 10 of the bicycle, the disk apparatus 1 is enabled to be installed to the front wheel installed to the fork of the bicycle.

When the wheel 10 is rotated as a user pedals the bicycle, electric power is continuously induced to the coil units 110 and 110' of the fixing plate 100 while the magnet units 210 and 210' of the ring-shaped rotational plates 200 and 200' are rotated so that the electric power is generated corresponding to the rotation rate of the wheel. To the contrary, when electric power is provided to the coil units 110 and 110', the torque is generated to the ring-shaped rotational plates 200 and 200' due to the repulsive force caused according to the polarity of the power applied to the coil units 110 and 110'.

Thus, when the bicycle wheel 10 according to the present invention is applied to the bicycle disclosed in Korea Registered Pattern No. 0928433 issued to the same applicant of the present invention, the coil units 110 and 110', the coil units 110 and 110' of the fixing plate 100 are connected to the control box 40 and the battery 41 and the shift switch 42 withdrawn from the control box 40 is fixed to the handle bar of the bicycle, so that a bicycle driven by the bicycle wheel 10 having the disk apparatus 1 of the present invention is completed.

Therefore, when the ring-shaped rotational plates 200 and 200' are rotated by the driving force generated as a user pedals the bicycle, a charge polarity is applied to the coil units 110 and 110' of the fixing plate 100 by the magnet units 210 and 210', so that electric power is generated. The electric power generated from the coil units 110 and 110' by the electromotive force is provided to the battery 41 through the control box 40 having charging circuits such as a transformer and a rectifying device, so that the battery may be charged. Therefore, the disk apparatus may serve as a generator.

When the electric power is applied from the charged battery 41 to the coil units 110 and 110', the polarity of the charges generated from the coil units 110 and 110' interferes with the polarity of the magnet units 210 and 210' so that repulsive force is generated between them. The polarity of the power supplied from the battery 41 to the coil units 110 and 110' is alternately changed by the control circuit of the control box 40 so that the repulsive force is repeatedly operated, so the ring-shaped rotational plates 200 and 200' and the bicycle wheel 10 may be rotated by themselves. Therefore, the disk apparatus may serve as an electric motor.

A separated brake switch (not shown) is provided. When the power is cut off by the brake switch, the disk apparatus is operated as a generator. When a load value adjusted corresponding to the a range of a control lever or a pedal is increased, the coil units 110 and 110' are converted into electromagnets so that the coil units 110 and 110' pull the magnet units 210 and 210', so the ring-shaped rotational plates 200 and 200' are stopped from being rotated. Therefore, the disk apparatus may serve as a brake.

The control box 40, which is well known through a previous registered pattern, may include a polarity converting circuit for a phase control, a charging circuit and a unit speed variable control circuit. If necessary, the control box 40 may further include an automatic shift circuit which allows the disk apparatus to be automatically converted from a generator to an electric motor or vice versa, according to the quantity of electric power generated from the coil units 110 and 110' of the fixing plate 100 while the ring-shaped rotational plates 200 and 200' are rotated.

Therefore, the disk apparatus according to the present invention is installed to the bicycle wheel to generate electric power and the bicycle is switched so that the bicycle is used as an electric-powered bicycle which receives driving force from the disk apparatus. The disk apparatus allows the battery to be charged while the bicycle is pedaled on a descent or the level ground. In addition, in the state that the battery is charged, the disk apparatus provides driving force to the bicycle on an ascent or a level ground, so that the bicycle may be more conveniently used and may be electric-braked more stably.

Meanwhile, although an application of the disk apparatus 1 according to the present invention to the bicycle has been described above, the disk apparatus can also be installed to a wheel of a motorcycle or a vehicle. In this case, the motorcycle or vehicle may be driven by using fuel or the electric power of the battery charged by the disk apparatus 1, so that the disk apparatus 1 can provide a hybrid function of supporting the existing fuel engine power.

## Claims

1. A disk apparatus for a wheel of a motorized vehicle, having a detachable/attachable structure from/to a side of the wheel, the disk apparatus comprising:
a fixing plate (100) provided at both side surfaces thereof with coil units (110, 110'), which are radially disposed, and formed at a center thereof with a through-hole (120) so as to be coupled to a wheel shaft (11) of the wheel (10); and
a pair of ring-shaped rotational plates (200, 200') facing each other, having a ring shape and formed at side surfaces thereof with magnet units (210, 210') disposed radially corresponding to the coil units (110, 110') of the fixing plate (100),
wherein the fixing plate (100) includes a main fixing plate (100a) having a disk shape and a through-hole (120) at the center thereof, and a ring-shaped fixing plate (100b) having a circular-plate shape and coil units (110, 110') radially disposed on both side surfaces of the ring-shaped fixing plate (100b), the main fixing plate (100a) coupled to the wheel shaft (11) through the through-hole (120), and the ring-shaped fixing plate (100b) coupled to one side surface of the main fixing plate (100a) through a coupling unit (300) to form a step difference,
wherein the ring-shaped rotational plates (200, 200') are coupled through a coupling unit (300) to a rim (12) coupled to the wheel shaft (11) through a bearing (13) and a hub (14), such that the coil units (110, 110') and the magnet units (210, 210') correspond to each other while being spaced apart from each other at a same interval on both side surfaces of the ring-shaped fixing plate (100b), whereby, when the fixing plate (100) and the ring-shaped rotational plates (200, 200') are installed to a rim-type wheel having a spoke (20) connected to the hub (14), the main fixing plate (100a) is first coupled to the wheel shaft (11) and one ring-shaped rotational plate (200) is coupled to the spoke (20), which is inside the wheel (10), at one side of the ring-shaped fixing plate (100b) through the coupling unit (300), the other ring-shaped rotational plate (200') is coupled to a side surface of the rim (12) at an opposite side of the ring-shaped fixing plate (100b) through the coupling unit (300), such that the disk apparatus is detachably attached to an existing wheel.

2. The disk apparatus of claim 1, wherein the fixing plate (100) and the ring-shaped rotational plates (200, 200') are applied to a rim (12)-type wheel (10) having a spoke (20) connected to the hub (14), the fixing plate (100) is coupled to the wheel shaft (11), one ring-shaped rotational plate (200) is coupled to the spoke (20) of the rim (12) through a ring-type coupling unit (300) at one side of the fixing plate (100), and a remaining ring-shaped rotational plate (200') is coupled to a side surface of the rim (12) through a piece-type coupling unit (300) at an opposite side of the fixing plate (100).

3. The disk apparatus of claim 1, wherein the fixing plate (100) and the ring-shaped rotational plates (200, 200') are applied to a rim (12)-type wheel (10) having a central disk (30) connected to the hub (14), the fixing plate (100) is coupled to the wheel shaft (11), one ring-shaped rotational plate 200 is coupled to the central disk (30) of the rim (12) through a piece-type coupling unit (300) at one side of the fixing plate (100), and a remaining ring-shaped rotational plate (200') is coupled to a side surface of the rim (12) through a piece-type coupling unit (300) at an opposite side of the fixing plate (100).

4. The disk apparatus of claim 1, wherein the fixing plate (100) and the ring-shaped rotational plates (200, 200') are applied to a rim (12)-type wheel (10) having an eccentric disk (30) connected to the hub (14), the fixing plate (100) is coupled to the wheel shaft (11), one ring-shaped rotational plate (200) is coupled to an inner periphery surface of the rim (12) through a piece-type coupling unit (300) at one side of the fixing plate (100), and a remaining ring-shaped rotational plate (200') is coupled to a side surface of the rim (12) through a piece-type coupling unit (300) at an opposite side of the fixing plate (100).

5. The disk apparatus of one of claims 1 to 4, wherein the fixing plate (100) includes a single plate member having a disk shape, a through-hole (130) at a center thereof, and coil units (110, 110') radially disposed on both side surface thereof, and the fixing plate (100) is coupled to the wheel shaft (11) through the through-hole (130).

6. The disk apparatus of one of claims 2 to 4, wherein the fixing plate (100) and the ring-type rotational plates (200, 200') are prepared as a one-pair structure, and coupled to each other only at one side about the spoke (20) of the rim (12) or the disk (30).

7. The disk apparatus of claim 2 or 3, wherein the fixing plate (100) and the circular rotational plates (200, 200') are prepared as a two-pair structure, and symmetrically coupled to each other at both sides about the spoke (20) of the rim (12) or the disk (30).

## Patentansprüche

1. Scheibenvorrichtung für ein Rad eines motorbetriebenen Fahrzeugs, die eine von/an einer Seite des Rads abnehmbare/anbringbare Struktur hat, wobei die Scheibenvorrichtung aufweist:
eine Fixierplatte (100), die an ihren beiden Seitenflächen mit Spuleneinheiten (110,110') versehen ist, welche radial angeordnet sind, und die an ihrer Mitte mit einem Durchgangsloch (120) versehen ist, so dass sie mit einer Radwelle (11) des Rads (10) verbunden werden kann; und
ein Paar einander gegenüberliegender ringförmiger Drehplatten (200, 200'), die eine Ringform haben und an Seitenflächen mit Magneteinheiten (210,210') versehen sind, welche entsprechend den Spuleneinheiten (110,110') der Fixierplatte (100) radial angeordnet sind,
wobei die Fixierplatte (100) eine Hauptfixierplatte (100a), die eine Scheibenform und an ihrer Mitte ein Durchgangsloch (120) hat, und eine ringförmige Fixierplatte (100b) aufweist, die eine Kreisplattenform und Spuleneinheiten (110,110') hat, die an beiden Seiten der ringförmigen Fixierplatte (100b) radial angeordnet sind, wobei die Hauptfixierplatte (100a) an der Radwelle (11) mittels des Durchgangslochs (120) befestigt ist und wobei die ringförmige Fixierplatte (100b) mit einer Seitenfläche der Hauptfixierplatte (100a) mittels einer Kopplungseinheit (300) derart verbunden ist, dass eine Stufen-Differenz gebildet wird,
wobei die ringförmigen Drehplatten (200,200') mittels einer Kopplungseinheit (300) mit einer Felge (12) verbunden sind, die mittels eines Lagers (13) und einer Nabe (14) mit der Radwelle (11) verbunden ist, derart, dass die Spuleneinheiten (110,110') und die Magneteinheiten (210,210') einander entsprechen, während sie voneinander mit einem gleichen Intervall an beiden Seitenflächen der ringförmigen Fixierplatte (100b) beabstandet sind, wodurch, wenn die Fixierplatte (100) und die ringförmigen Drehplatten (200,200') an einem Rad vom Typ mit Felge installiert sind, das eine mit der Nabe (14) verbundene Speiche (20) aufweist, die Hauptfixierplatte (100a) zuerst mit der Radwelle (11) verbunden ist und eine ringförmige Drehplatte (200) an einer Seite der ringförmigen Fixierplatte (100b) mittels der Kopplungseinheit (300) mit der Speiche (20) verbunden ist, die in dem Rad (10) angeordnet ist, und die andere ringförmige Drehplatte (200') an einer gegenüberliegenden Seite der ringförmigen Fixierplatte (100b) mittels der Kopplungseinheit (300) mit einer Seitenfläche der Felge (12) verbunden ist, derart, dass die Scheibenvorrichtung abnehmbar an einem existierenden Rad befestigt ist.

2. Scheibenvorrichtung nach Anspruch 1, bei der die Fixierplatte (100) und die ringförmigen Drehplatten (200,200') an einem Rad (10) vom Typ mit Felge (12), das eine mit der Nabe (14) verbundene Speiche (20) aufweist, angeordnet sind, die Fixierplatte (100) mit der Radwelle (11) verbunden ist, eine ringförmige Drehplatte (200) mit der Speiche (20) der Felge (12) mittels einer ringförmigen Kopplungseinheit (300) an einer Seite der Fixierplatte (100) verbunden ist, und die verbleibende ringförmige Drehplatte (200') mit einer Seitenfläche der Felge (12) mittels einer stückartigen Kopplungseinheit (300) an einer gegenüberliegenden Seite der Fixierplatte (100) verbunden ist.

3. Scheibenvorrichtung nach Anspruch 1, bei der die Fixierplatte (100) und die ringförmigen Drehplatten (200,200') an einem Rad (10) vom Typ mit Felge (12), das eine mit der Nabe (14) verbundene zentrale Scheibe (30) aufweist, angeordnet sind, die Fixierplatte (100) mit der Radwelle (11) verbunden ist, eine ringförmige Drehplatte (200) mit der zentralen Scheibe (30) der Felge (12) mittels einer stückartigen Kopplungseinheit (300) an einer Seite der Fixierplatte (100) verbunden ist, und die verbleibende ringförmige Drehplatte (200') mit einer Seitenfläche der Felge (12) mittels einer stückartigen Kopplungseinheit (300) an einer gegenüberliegenden Seite der Fixierplatte (100) verbunden ist.

4. Scheibenvorrichtung nach Anspruch 1, bei der die Fixierplatte (100) und die ringförmigen Drehplatten (200,200') an einem Rad (10) vom Typ mit Felge (12), das eine mit der Nabe (14) exzentrische Scheibe (30) aufweist, angeordnet sind, die Fixierplatte (100) mit der Radwelle (11) verbunden ist, eine ringförmige Drehplatte (200) mit einer Innenumfangsfläche der Felge (12) mittels einer stückartigen Kopplungseinheit (300) an einer Seite der Fixierplatte (100) verbunden ist, und die verbleibende ringförmige Drehplatte (200') mit einer Seitenfläche der Felge (12) mittels einer stückartigen Kopplungseinheit (300) an einer gegenüberliegenden Seite der Fixierplatte (100) verbunden ist.

5. Scheibenvorrichtung nach einem der Ansprüche 1 bis 4, bei der die Fixierplatte (100) ein einziges Plattenteil aufweist, das eine Scheibenform, ein Durchgangsloch (130) an seiner Mitte, und Spuleneinheiten (110,110') hat, die radial an seinen beiden Seitenflächen angeordnet sind, und die Fixierplatte (100) mittels des Durchgangslochs (130) mit der Radwelle (11) verbunden ist.

6. Scheibenvorrichtung nach einem der Ansprüche 2 bis 4, bei der die Fixierplatte (100) und die ringförmigen Drehplatten (200,200') als Ein-Paar-Struktur ausgebildet sind und miteinander nur an einer Seite um die Speiche (20) der Felge (12) oder die Scheibe (30) herum verbunden sind.

7. Scheibenvorrichtung nach 2 oder 3, bei die Fixierplatte (100) und die kreisförmigen Drehplatten (200,200') als Zwei-Paar-Struktur ausgebildet sind und miteinander symmetrisch an beiden Seiten um die Speiche (20) der Felge (12) oder die Scheibe (30) herum verbunden sind.

## Revendications

1. Appareil de disque pour une roue d'un véhicule motorisé, ayant une structure détachable/attachable de/à un côté de la roue, l'appareil de disque comprenant :
une plaque de fixation (100) pourvue au niveau des deux surfaces de côté de celle-ci d'unités de bobines (110, 110'), qui sont disposées radialement, et formée au centre de celle-ci avec un trou traversant (120) de façon à être couplée à un arbre de roue (11) de la roue (10) ; et
une paire de plaques rotatives en forme d'anneau (200, 200') en regard l'une de l'autre, ayant une forme d'anneau et formées au niveau de surfaces de côté de celles-ci avec des unités d'aimant (210, 210') disposées radialement correspondant aux unités de bobine (110, 110') de la plaque de fixation (100),
dans lequel la plaque de fixation (100) comporte une plaque de fixation principale (100a) ayant une forme de disque et un trou traversant (120) au centre de celle-ci, et une plaque de fixation en forme d'anneau (100b) ayant une forme de plaque circulaire et des unités de bobine (110, 110') disposées radialement sur les deux surfaces de côté de la plaque de fixation en forme d'anneau (100b), la plaque de fixation principale (100a) étant couplée à l'arbre de roue (11) par l'intermédiaire du trou traversant (120), et la plaque de fixation en forme d'anneau (100b) étant couplée à une surface de côté de la plaque de fixation principale (100a) par l'intermédiaire d'une unité de couplage (300) pour former une différence de niveau,
dans lequel les plaques rotatives en forme d'anneau (200, 200') sont couplées par l'intermédiaire d'une unité de couplage (300) à une jante (12) couplée à l'arbre de roue (11) par l'intermédiaire d'un palier (13) et d'un moyeu (14), de sorte que les unités de bobine (110, 110') et les unités d'aimant (210, 210') correspondent les unes aux autres tout en étant espacées les unes des autres à un même intervalle sur les deux surfaces de côté de la plaque de fixation en forme d'anneau (100b), moyennant quoi, lorsque la plaque de fixation (100) et les plaques rotatives en forme d'anneau (200, 200') sont installées sur une roue de type à jante ayant un rayon (20) raccordé au moyeu (14), la plaque de fixation principale (100a) est d'abord couplée à l'arbre de roue (11) et une plaque rotative en forme d'anneau (200) est couplée au rayon (20), qui est à l'intérieur de la roue (10), d'un côté de la plaque de fixation en forme d'anneau (100b) par l'intermédiaire de l'unité de couplage (300), l'autre plaque rotative en forme d'anneau (200') est couplée à une surface de côté de la jante (12) d'un côté opposé de la plaque de fixation en forme d'anneau (100b) par l'intermédiaire de l'unité de couplage (300), de sorte que l'appareil de disque soit attaché de façon amovible à une roue existante.

2. Appareil de disque selon la revendication 1, dans lequel la plaque de fixation (100) et les plaques rotatives en forme d'anneau (200, 200') sont appliquées à une roue (10) de type à jante (12) ayant un rayon (20) raccordé au moyeu (14), la plaque de fixation (100) est couplée à l'arbre de roue (11), une plaque rotative en forme d'anneau (200) est couplée au rayon (20) de la jante (12) par l'intermédiaire d'une unité de couplage de type bague (300) d'un côté de la plaque de fixation (100), et une plaque rotative en forme d'anneau restante (200') est couplée à une surface de côté de la jante (12) par l'intermédiaire d'une unité de couplage de type à pièce (300) d'un côté opposé de la plaque de fixation (100).

3. Appareil de disque selon la revendication 1, dans lequel la plaque de fixation (100) et les plaques rotatives en forme d'anneau (200, 200') sont appliquées à une roue (10) de type à jante (12) ayant un disque central (30) raccordé au moyeu (14), la plaque de fixation (100) est couplée à l'arbre de roue (11), une plaque rotative en forme d'anneau 200 est couplée au disque central (30) de la jante (12) par l'intermédiaire d'une unité de couplage de type à pièce (300) d'un côté de la plaque de fixation (100), et une plaque rotative en forme d'anneau restante (200') est couplée à une surface de côté de la jante (12) par l'intermédiaire d'une unité de couplage de type à pièce (300) d'un côté opposé de la plaque de fixation (100).

4. Appareil de disque selon la revendication 1, dans lequel la plaque de fixation (100) et les plaques rotatives en forme d'anneau (200, 200') sont appliquées à une roue (10) de type à jante (12) ayant un disque excentrique (30) raccordé au moyeu (14), la plaque de fixation (100) est couplée à l'arbre de roue (11), une plaque rotative en forme d'anneau (200) est couplée à une surface de périphérie intérieure de la jante (12) par l'intermédiaire d'une unité de couplage de type à pièce (300) d'un côté de la plaque de fixation (100), et une plaque rotative en forme d'anneau restante (200') est couplée à une surface de côté de la jante (12) par l'intermédiaire d'une unité de couplage de type à pièce (300) d'un côté opposé de la plaque de fixation (100).

5. Appareil de disque selon l'une des revendications 1 à 4, dans lequel la plaque de fixation (100) comporte un organe de plaque unique ayant une forme de disque, un trou traversant (130) à un centre de celle-ci, et des unités de bobine (110, 110') disposées radialement sur les deux surfaces de côté de celle-ci, et la plaque de fixation (100) est couplée à l'arbre de roue (11) par l'intermédiaire du trou traversant (130).

6. Appareil de disque selon l'une des revendications 2 à 4, dans lequel la plaque de fixation (100) et les plaques rotatives de type bague (200, 200') sont préparées en tant que structure à une paire, et couplées les unes aux autres uniquement d'un côté autour du rayon (20) de la jante (12) ou du disque (30).

7. Appareil de disque selon la revendication 2 ou 3, dans lequel la plaque de fixation (100) et les plaques rotatives circulaires (200, 200') sont préparées en tant que structure à deux paires, et couplées symétriquement les unes aux autres des deux côtés autour du rayon (20) de la jante (12) ou du disque (30).
